# EUROPEAN PATENT SPECIFICATION

(11) **EP 0 884 169 B1**
(45) Date of publication and mention of the grant of the patent: **04.12.2002**
(21) Application number: 98304628.5
(22) Date of filing: 11.06.1998
(51) Int. Cl.: B29D 30/48

(54) **Rubber element for a tyre and a method of manufacturing the same**
Reifenbestandteil aus Gummi und Verfahren zu seiner Herstellung
Elément en caoutchouc pour pneu et procédé pour sa fabrication

(30) Priority: 13.06.1997 JP 17321697
(43) Date of publication of application: 16.12.1998
(73) Proprietor: Sumitomo Rubber Industries Ltd., Kobe-shi, Hyogo-ken (JP)
(72) Inventor: Suzuki, Kazuya, Shirakawa-shi, Fukushima (JP); Jumonji, Nagayoshi, Nishishirakawa-gun, Fukushima (JP)
(74) Representative: Stewart, Charles Geoffrey

(56) References cited:
- DE-A- 2 635 233
- FR-A- 2 254 450
- US-A- 2 971 553
- US-A- 4 321 957
- US-A- 5 080 738

## Description

This invention relates to a rubber element for a tyre and a method of manufacturing the same.

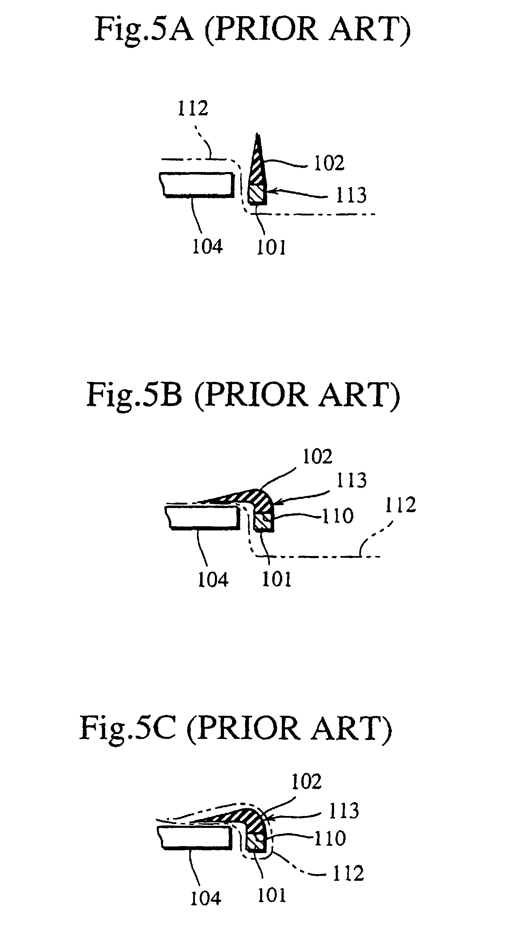

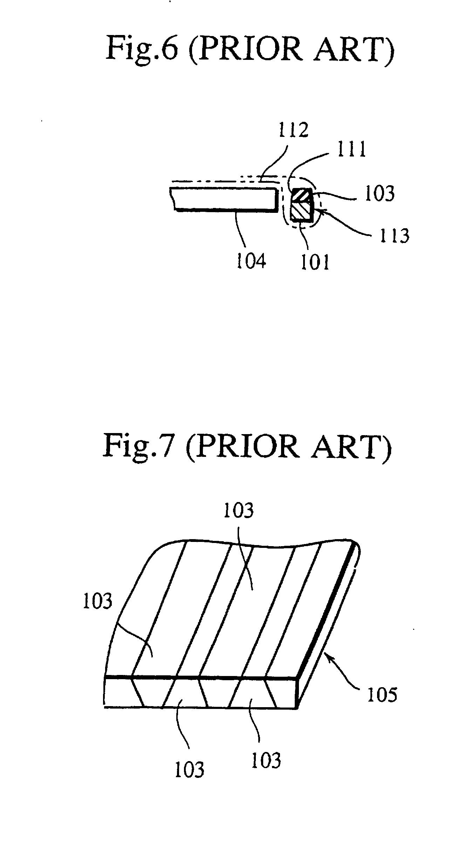

Among the elements composing a tyre, there is a subassembly 113 comprising a rubber apex 102 attached to a bead core 101. The apex 102 has a cross-sectional configuration which is generally a triangle as shown in Figure 5A. An alternative prior art element 113 comprising a bead core 101 and an apex (which is a bead filler or a stiffener) 103 whose cross-sectional configuration is generally a trapezoid and which is attached to the bead core 101 is shown in Figure 6.

When forming a tyre, a carcass inner component 112 comprising layers of an inner liner and a reinforcement ply is wrapped around a cylindrical former 104 and at each side of the former a rubber element 113 is positioned over the edge. Then the apex 102 is bent over, i.e. the apex 102 is shaped onto the former 104 as shown in Figure 5B. To bend the apex 102 on its side, the apex 102 is pressed down with a relatively high pressure by, for example, a stitcher, and this process is bothersome. Moreover because of the pressure applied to the apex (in the processes shown in the Figures 5B and 5C), there is a possibility that the joining face 110 between the bead core 101 and the apex 102 is 'cracked (separated)', and then air enters the crack (separation), and a defective tyre may thereby be manufactured. Moreover the apex 102 which is once bent down to the former as shown in Figure 5C may start to rise up (spring up) by elastic restoring force thereof, and a 'partial rising' from the sheet-like member 112 can be caused. The apex 103 of the rubber element for the tyre shown in Figure 6 does not need to be bent down to the former in the process of manufacturing a tyre, however the inclined side face 111 of the apex 103 does not fit to the sheet-like member 112 which is the reinforcement ply, and the apex 103 and the bead core 101 to which the apex 103 is attached slip down their initial fixed position on the sheet-like member 112.

To manufacture the rubber element 113 shown in Figure 6, processes as follows are required. First sheet-like rubber material 105 is formed as shown in Figure 7, then the rubber material 105 is cut to form an apex 103 whose cross-sectional configuration is generally a trapezoid. This is then attached to the bead core 101. This manufacturing method requires the bothersome operations above, and by manufacturing the rubber element by the conventional method, some parts of the material are left unused and are wasted.

An apex whose sectional configuration is generally a trapezoid is moulded by an extrusion machine in some cases, however, this rubber extruded from a die plate of the extrusion machine is often twisted and it is not possible to straighten it.

It is therefore an object of the present invention to provide a rubber element for a tyre for which the operation of bending down the apex is not needed, and inferiority in adhesion of the apex to the carcass is not caused after setting the rubber element, i.e. to produce a the rubber element for a tyre by which it is possible to increase productivity of tyres and to prevent manufacturing defective tyres. It is another object of the present invention to provide a simple and sure method of manufacturing the rubber element itself.

According to one aspect of the present invention a rubber element for a tyre which comprises a bead core and an apex whose inner face is attached to an outer circumferential face of said bead core, is characterised by said apex having a cross-sectional configuration which is generally a rectangle whose two corners on the outer circumference of said apex are rounded off.

The corners may be rounded off to give a cross-section which is generally a semi-ellipse or a semi-circle. Preferably the rubber apex has a hardness in the range of JIS A 83° to 98°.

Another aspect of the invention provides a method of manufacturing a rubber element for a tyre.

The present invention will be described, by way of example only, with reference to the accompanying drawings, in which:
Figures 1A is a schematic sectional view of a rubber element for a tyre according to the present invention;
Figure 1B is an explanatory view of sectional configurations of apexes;
Figure 2 is a perspective view of a linear rubber body for forming an apex;
Figure 3 is a schematic view of a method of manufacturing the rubber element according to the present invention;
Figure 4A is a process view of the method of manufacturing the rubber element;
Figure 4B is a process view of the method of manufacturing the rubber element;
Figure 5A is a schematic sectional view of a conventional rubber element;
Figure 5B is a schematic sectional view of the conventional rubber element;
Figure 5C is a schematic sectional view of the conventional rubber element;
Figure 6 is a schematic sectional view of another conventional rubber element; and
Figure 7 is an explanatory view of the method of manufacturing the rubber element illustrated in Figure 6.

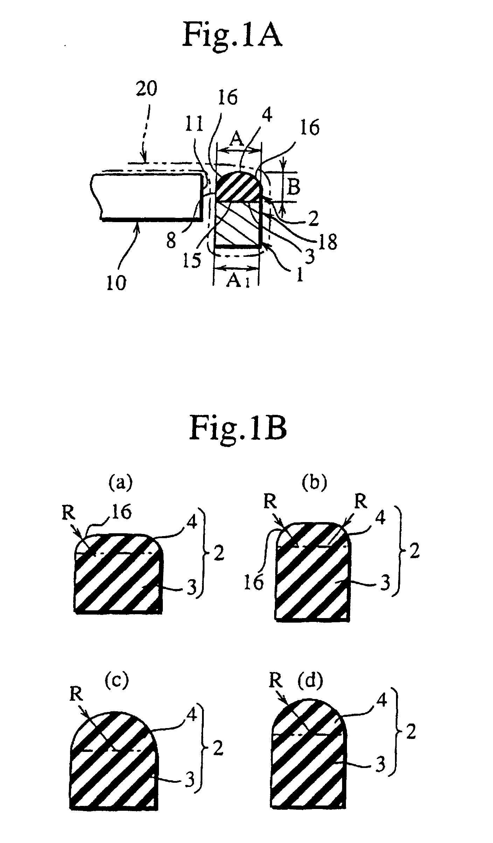

Figure 1A shows a rubber element 18 for a tyre according to the present invention which comprises a bead core 1 and an apex 2 (which can be called a bead filler or a stiffener) attached to the bead core 1.

The apex 2 of this invention has a cross-sectional configuration which is generally a rectangle whose two corners on the outer circumference of the apex are rounded off i.e. it is generally D-shaped in cross section. Specifically in the embodiments shown in Figure 1A and Figure 1B(a) the apex 2 comprises a first portion 3 whose cross-sectional configuration is generally a rectangle, and second portion 4 whose cross-sectional configuration is generally a semi-ellipse (which is divided by a major axis of an ellipse) and integrally moulded on an outer circumference of the first portion 3, and both of side faces of the apex 2 are planes which are parallel. In another embodiment of the apex shown in Figure 1B(b), the apex has a cross-sectional configuration which a combination of a first portion 3 whose cross-sectional configuration is generally a square and a second portion 4 whose cross-sectional configuration is generally a semi-ellipse. In a further embodiment of the apex shown in Figure 1B(c), the apex has a cross-sectional configuration which a combination of a first portion 3 whose cross-sectional configuration is generally a rectangle and a second portion 4 whose cross-sectional configuration is generally a semi-circle. In still another embodiment of the apex shown in Figure 1B(d), the apex has a cross-sectional configuration which a combination of a first portion 3 whose cross-sectional configuration is generally a square and a second portion 4 whose cross-sectional configuration is generally a semi-circle. The rubber hardness of this apex 2 is arranged to be JIS (Japanese Industrial Standard) A 83° to 98°. Regarding dimensions of the apex 2 in section, if the length of a base of the apex 2, i.e. an axial length of an inner face 15 (which corresponds to an axial length A₁ of the bead core 1) is expressed by 'A', the height (radial length) of the apex is expressed by 'B' and the radius of curvature of each curved portions 16 of the apex is expressed by 'R', then A = 5mm, B = 8mm, R = 2.5mm, for example.

Next, explained below is a method of manufacturing a rubber element for a tyre.

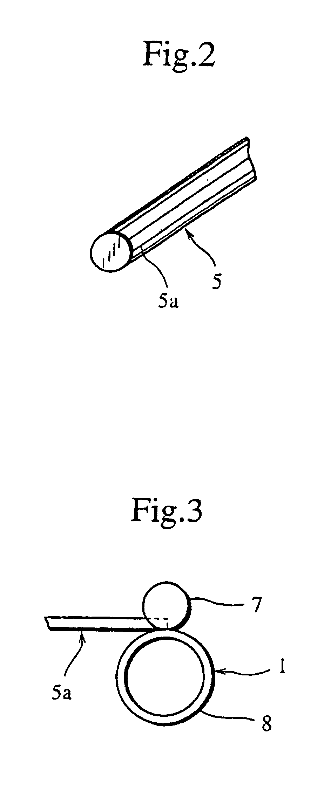

First, as shown in Figure 2, a linear rubber body 5 whose sectional configuration is a circle is formed by extrusion, and by cutting the linear body 5 to a predetermined length so that a linear rubber body 5a of predetermined length is results. After that, the rubber body 5a is attached to the bead core 1 which is a ring shape as shown in Figure 3.

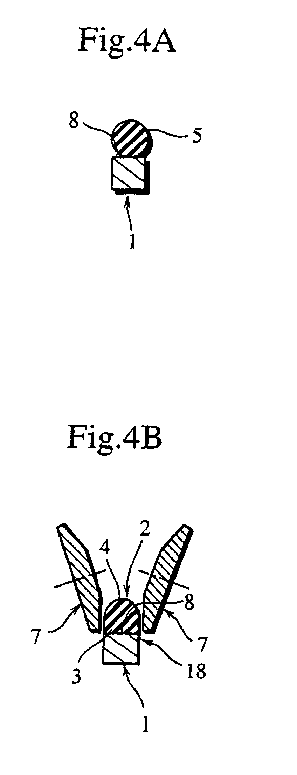

This is done by feeding the rubber body 5a between a pair of fitting rollers 7, by pressing it onto the outer circumferential face 8 of the bead core 1 whilst rotating the bead core 1, so that the rubber body 5a shown as 5 in Figure 4A is shaped into the apex 2 having the configuration illustrated in Figure 4B (which is generally a rectangular configuration in cross-section whose two corners on outer circumference of the apex are rounded off) and attached to the bead core 1. That is to say the inner face 15 of the first portion 3 of the apex 2 is attached to the outer circumferential face 8 of the bead core 1.

The rubber element 18 for a tyre manufacture by the method described above is fitted to the edges of a sheet-like member 20, indicated in the Figures by alternate long and two short dashes lines and comprising layers of an inner liner and a carcass reinforcing ply, on a former 10 (see Figure 1A). That is to say, the sheet-like member 20 is wrapped around the former 10, the rubber element 18 is positioned over a turned-down edge, and then the member 20 is 'turned-up' around the rubber element 18.

The side face of the apex 2, i.e. the side face of the first position 3 is not inclined towards the end face 11 of the former 10 and so the liner ply assembly is prevented from 'partial rising', and inferiority in adhesion of the apex to the sheet-like member is not caused. Consequently the bead portion of the finished tyre can be assembled to a rim so that the bead portion and the rim form a full circular configuration, thereby RFV (Radial Force Variation) of the tyre can be decreased. As dimension of the apex 2 are arranged as the example described above, i.e. A = 5mm, B = 8mm, R = 2.5mm, inferiority in adhesion of the apex to the sheet-like member is not caused.

When forming a tyre, the apex of the present invention does not need to be bent over, whereas in the prior art each apex 102 shown in Figures 5A to 5C whose sectional configuration is generally a triangular configuration and needs to be bent down. Thereby the force required to bend down the apex is not needed when moulding the tyre with the rubber element of the present invention, and 'crack (separation)' is not caused between the bead core 1 and the apex 2.

Because the linear body 5 forming the linear rubber body 5a is a rubber product whose sectional configuration is a circle (which is an identical configuration with a screw for extrusion), a linear rubber body 5a of high quality can be manufactured even if the linear body 5 which is extruded is twisted. Moreover the apex 2 is a rubber having a hardness of JIS A 83° to 98° and the apex shows great strength.

To check the effectiveness of the invention rubber elements 113 having apexes 102, each of which was generally of triangular configuration in section as shown in Figures 5A to 5C, were manufactured as Conventional Product 1, rubber elements 113 for a tyre having apexes 103, each of which is generally a trapezoid configuration in section were manufactured as Conventional Product 2, and rubber elements 18 for a tyre having apexes 2 each of which has a sectional configuration illustrated in Figure 1A were manufactured as Product (Example) of the present invention. Tyres were manufactured with the respective rubber elements. The results of manufacturing the tyres are shown in Table 1. The size of the rubber elements for tyres is 145R12, and 100 pieces of rubber elements for tyres were respectively manufactured as the Conventional Products 1, the Conventional Products 2, and the Products of the Present Invention.

**TABLE 1**

| | Conventional Product 1 | Conventional Product 2 | Product of the Present Invention |
|---|---|---|---|
| Manufacturing Rate of Defective Products % | 5 | 7 | 0 |
| Productivity Index | 100 | 80 | 70 |

In the results in Table 1 for manufacturing rate of defective products, when tyres were manufactured with the conventional products 1, tyres having sheet-like members 112 which were creased or partially risen in the process of bending down the apexes of the convention product 1 by partial spring back of the apexes, were sorted out as defective products. In the results in Table 1 of manufacturing rate of defective products when tyres where manufactured with the conventional products 2, sheet-like members 112 of the tyres which were partially risen were sorted out as the defective products. It is apparent from the Table 1 that no defective products were manufactured when tyres were manufactured with the products of the present invention. However in the case of manufacturing tyres with conventional products 1, 5% of the tyres manufactured were defective products, and in the case of manufacturing tyres with conventional products 2, 7% of the tyres manufactured were defective products.

Each 'Productivity Index' shows the time expressed as percentages which is required to form a tyre when manufacturing a tyre with a conventional product 2 or a product of the present invention based on the time of manufacturing a tyre with a conventional product 1 to be '100'. In the case of manufacturing a tyre with a conventional product 1, an apex-down process and a ply-stitch process (a process to release remained air generated in the process of assembling an element to a ply, and the process to stitch a ply by a ply-stitcher) are required. In a case of manufacturing a tyre using a conventional product 2, a ply-stitch process is required, and in the case of manufacturing a tyres using a product of the present invention, neither apex-down process nor a ply-stitch process is required. As the productivity index of the case of manufacturing a tyre with the conventional product 1 is arranged to be '100', in the case of manufacturing a tyre with the conventional product 2, a tyre is manufactured in 80% of the time required to manufacture a tyre with the conventional product 1. In the case of manufacturing a tyre with a product of the present invention, a tyre is manufactured in 70% of the time required to manufacture a tyre with the conventional product 1. These results show that a tyre can be manufactured in a shorter time when the tyre is manufactured with the product of the present invention.

The rubber element for a tyre according to the present invention allows the omission of the step of laying down the apex when manufacturing a tyre with the rubber element of the present invention (while the conventional case using the apex whose sectional configuration is generally a triangle needs to be bent down). As a result, the whole manufacturing process time can be shortened.

In a tyre which is formed with a rubber element for a tyre according to the present invention, inferiority in adhesion of apex to sheet-like member is not caused, and the bead portion of the finished tyre can be assembled to a rim so that the bead portion and the rim form a full circle configuration, thereby RFV (Radial Force Variation) of the tyre can be decreased.

In the tyre which is formed with a rubber element for a tyre according to the present invention, the process to bend down an apex is omitted and 'crack (separation)' is not be caused at the joining face between the bead core 1 and the apex 2, and defective tyres are not manufactured.

In the tyre which is formed with a rubber element for a tyre according to the present invention, the hardness of an apex 2 is adequate and inferiority in adhesion of its apex to the sheet-like member is prevented from occurring.

According to the present invention, a rubber element for a tyre which increases productivity of tyre, and which is surely prevented from producing defective tyre, can be easily manufactured with accuracy.

While preferred embodiments of the present invention have been described in this specification, it is to be understood that the invention is illustrative and not restrictive, because various changes are possible.

## Claims

1. A rubber element for a tyre which comprises a bead core (1) and an apex (2) whose inner face (15) is attached to an outer circumferential face (8) of said bead core (1), **characterised by** said apex (2) having a cross-sectional configuration which is generally a rectangle whose two corners on the outer circumference of said apex (2) are rounded off.

2. A rubber element according to claim 1, **characterised in that** the corners are rounded off together and the said apex (2) comprises a first portion (3) whose cross-sectional configuration is generally a rectangle, and a second portion (4) whose cross-sectional configuration is generally a semi-ellipse and integrally moulded on an outer circumference of said first portion (3), and an inner face (15) of said first portion (3) of said apex (2) is attached to an outer circumferential face (8) of said bead core (1).

3. A rubber element according to claim 1, **characterised in that** the corners are rounded off together and the apex (2) comprises a first portion (3) whose cross-sectional configuration is generally a rectangle, and a second portion (4) whose cross-sectional configuration is generally a semi-circle and integrally moulded on an outer circumference of said first portion (3), and an inner face (15) of said first portion (3) of said apex (2) is attached to an outer circumferential face (8) of said bead core (1).

4. A rubber element according to any of claims 1 to 3, **characterised in that** the rubber hardness of said apex (2) is arranged to be JIS A 83° to 98°.

5. A method of manufacturing a rubber element for a tyre, **characterised by** the steps of moulding a linear rubber body (5a) of predetermined length for forming an apex having a circular configuration in section, pressing said linear rubber body (5a) by fitting rollers (7) to form said apex (2) having a cross-sectional configuration which is generally a rectangle whose two corners on the outer circumference of said apex (2) are rounded off, and attaching said apex (2) to a bead core (1).

## Patentansprüche

1. Kautschukelement für einen Reifen, das einen Wulstkern (1) und einen Kernreiter (2) umfasst, dessen Innenfläche (15) an einer Außenumfangsfläche (8) des Wulstkerns (1) angebracht ist, **dadurch gekennzeichnet, dass** der Kernreiter (2) eine Querschnittsform aufweist, die im Allgemeinen ein Rechteck ist, dessen beide Ecken am Außenumfang des Kernreiters (2) abgerundet sind.

2. Kautschukelement nach Anspruch 1, **dadurch gekennzeichnet, dass** die Ecken aneinander abgerundet sind und der Kernreiter (2) einen ersten Abschnitt (3); dessen Querschnittsform im Allgemeinen ein Rechteck ist, und einen zweiten Abschnitt (4) umfasst, dessen Querschnittsform im Allgemeinen eine Halbellipse ist, und der einstückig an einem Außenumfang des ersten Abschnitts (3) angeformt ist, und dass eine Innenfläche (15) des ersten Abschnitts (3) des Kernreiters (2) an einer Außenumfangsfläche (8) des Wulstkerns (1) angebracht ist.

3. Kautschukelement nach Anspruch 1, **dadurch gekennzeichnet, dass** die Ecken aneinander abgerundet sind und der Kernreiter (2) einen ersten Abschnitt (3), dessen Querschnittsform im Allgemeinen ein Rechteck ist, und einen zweiten Abschnitt (4) umfasst, dessen Querschnittsform im Allgemeinen ein Halbkreis ist, und der einstückig an einem Außenumfang des ersten Abschnitts (3) angeformt ist, und dass eine Innenfläche (15) des ersten Abschnitts (3) des Kernreiters (2) an einer Außenumfangsfläche (8) des Wulstkerns (1) angebracht ist.

4. Kautschukelement nach einem der Ansprüche 1 bis 3, **dadurch gekennzeichnet, dass** die Gummihärte des Kernreiters (2) derart eingerichtet ist, dass sie nach JIS A 83° bis 98° beträgt.

5. Verfahren zum Herstellen eines Kautschukeiements für einen Reifen, **gekennzeichnet durch** die Schritte, dass ein gerader Kautschukkörper (5a) mit einer vorbestimmten Länge geformt wird, um einen Kernreiter mit einer im Querschnitt kreisförmigen Form zu bilden, der gerade Kautschukkörper (5a) **durch** Befestigungswalzen (7) gepresst wird, um den Kernreiter (2) zu bilden, der eine Querschnittsform aufweist, die im Allgemeinen ein Rechteck ist, dessen beide Ecken am Außenumfang des Kernreiters (2) abgerundet sind, und der Kernreiter (2) an einem Wulstkern (1) angebracht wird.

## Revendications

1. Elément de caoutchouc destiné à un pneumatique qui comporte une tringle (1) et une pointe (2) de bourrage de talon dont une face interne (15) est fixée à une face circonférentielle externe (8) de la tringle (1), **caractérisé en ce que** la pointe (2) de bourrage de talon a une configuration en coupe de forme générale rectangulaire dont deux coins de la surface externe de la pointe (2) de bourrage de talon sont arrondis.

2. Elément de caoutchouc selon la revendication 1, **caractérisé en ce que** les coins sont raccordés sous forme arrondie, et la pointe (2) de bourrage de talon comprend une première partie (3) dont la configuration en coupe est un rectangle de façon générale et une seconde partie (4) dont la configuration en aoupe est une demi-ellipse de façon générale et est moulée solidairement à la circonférence externe de la première partie (3), et une face interne (15) de la première partie (3) de la pointe (2) de bourrage de talon est fixée à une face circonférentielle externe (8) de la tringle (1).

3. Elément de caoutchouc selon la revendication 1, **caractérisé en ce que** les coins sont raccordés sous forme arrondie et la pointe (2) de bourrage de talon comporte une première partie (3) dont la configuration en coupe est de façon générale un rectangle et une seconde partie (4) dont la configuration en coupe est de façon générale, un demi-cercle et est moulée solidairement à une circonférence externe de la première partie (3), et une face interne (15) de la première partie (3) de la pointe (2) de bourrage de talon est fixée à une face ciroonférentielle externe (8) de la tringle (1).

4. Elément de caoutchouc selon l'une quelconque des revendications 1 à 3, **caractérisé en ce que** la dureté JIS A dû caoutchouc de la pointe (2) de bourrage de talon est déterminée comme étant comprise entre 83° et 98°.

5. Procédé de fabrication d'un élément de caoutchouc pour pneumatique, **caractérisé par** des étapes de moulage d'un corps linéaire de caoutchouc (5a) de longueur prédéterminée, destiné à former une pointe de bourrage de talon de configuration circulaire en coupe, d'application d'une pression au corps linéaire (5a) de caoutchouc à l'aide de rouleaux (7) de montage pour la mise en forme de la pointe (2) de bourrage de talon qui a une configuration en coupe qui est de façon générale un rectangle tel que deux coins de la circonférence externe de la pointe (2) de bourrage de talon sont arrondis, et de fixation de la pointe (2) de bourrage de talon à une tringle (1).
